# EUROPÄISCHE PATENTSCHRIFT

(11) **EP 2 916 036 B1**
(45) Veröffentlichungstag und Bekanntmachung des Hinweises auf die Patenterteilung: **18.07.2018**
(21) Anmeldenummer: 15000567.6
(22) Anmeldetag: 27.02.2015
(51) Int. Cl.: F16H 37/04, F16H 3/097

(54) **Mehrgruppengetriebe mit einer Doppelkupplung**
Multi-group transmission with a double clutch
Boîte de vitesses à plusieurs groupes et à double embrayage

(30) Priorität: 06.03.2014 DE 102014003355
(43) Veröffentlichungstag der Anmeldung: 09.09.2015
(73) Patentinhaber: MAN Truck & Bus AG, 80995 München (DE)
(72) Erfinder: Tenberge, Peter, 09123 Chemnitz (DE); Kupka, Daniel Andreas, 46240 Bottrop (DE); Döbereiner, Rolf, 85221 Dachau (DE); Zieglmaier, Wolfgang, 85540 Haar (DE); Zoth, Daniel, 81543 München (DE)
(74) Vertreter: v. Bezold & Partner Patentanwälte - PartG mbB

(56) Entgegenhaltungen:
- DE-A1-102011 088 396
- DE-A1-102012 213 517
- DE-A1-102012 213 704
- DE-A1-102012 213 706

## Beschreibung

Die Erfindung betrifft ein Mehrgruppengetriebe vorzugsweise für ein Nutzfahrzeug (z.B. einen Lastkraftwagen). Aus DE 10 2010 003 924 A1 ist ein Mehrgruppengetriebe bekannt, das eine Splitgruppe, eine Hauptgruppe und eine Rangegruppe aufweist und das mit Hilfe einer Doppelkupplung, einer Vorgelegewelle und einer hohlen und einer vollen Getriebehauptwelle zwei separate Lastpfade zur Verfügung stellt und somit teilweise lastschaltbar ist. Die Lastschaltung der als Planetengetriebe ausgeführten Rangegruppe erfolgt, indem der Direktgang über die volle Getriebehauptwelle mit dem Sonnenrad und die hohle Getriebehauptwelle mit einem benachbarten Gang mit dem Steg des Planetengetriebes verbunden wird. Durch eine Überschneidungsschaltung der Doppelkupplung werden die Gänge umgeschaltet. Nachteilig ist z.B., dass die Schaltung 3-4 und die Schaltung 10-11 nicht lastschaltbar sind, da hier der Gang in der Hauptgruppe umzuschalten ist. Somit sind Lastschaltungen nur in der Splitgruppe und in der Rangegruppe möglich. Zudem ist aus DE 10 2010 003 924 A1 ein vollständig lastschaltbares Mehrgruppengetriebe bekannt. Das vollständig lastschaltbare Mehrgruppengetriebe weist aber nur einen Lastpfad in der Hauptgruppe auf, wodurch die Hauptgruppe somit nicht lastschaltbar ist und das Mehrgruppengetriebe nur acht Gänge zur Verfügung stellt.
Aus DE 10 2005 044 068 A1 ist ein Mehrgruppengetriebe bekannt, das eine Splitgruppe, eine Hauptgruppe und eine als Planetengetriebe ausgeführte Rangegruppe umfasst und zu einer vollen Vorgelegewelle noch zusätzlich eine hohle Vorgelegewelle aufweist und somit zwei Lastpfade in der Hauptgruppe zur Verfügung stellt. Zudem umfasst das Mehrgruppengetriebe ein Schaltelement, das drei quasi aktive Stellungsoptionen aufweist und somit keine Neutralstellung. In linker Stellung wird die volle Vorgelegewelle mit der hohlen Vorgelegewelle drehfest verbunden. In rechter Stellung wird die hohle Vorgelegewelle mit einem Losrad der Rangegruppe drehfest verbunden. In Mittenstellung werden die hohle Vorgelegewelle, die volle Vorgelegewelle und das Losrad miteinander drehfest verbunden. Das Schaltelement ermöglicht eine Lastschaltung in der Hauptgruppe zwischen zwei Gängen. Nachteilig ist z.B., dass nur einmal in der Hauptgruppe unter Last geschaltet werden kann. Um den dritten Hauptgruppengang zu schalten, ist eine Lastunterbrechung notwendig.

Die gattungsgemäße DE 10 2012 213706 A1 betrifft ein Getriebe, insbesondere Doppelkupplungsgetriebe, für ein Kraftfahrzeug, umfassend zumindest zwei Teilgetriebe, wobei jedes der Teilgetriebe zumindest eine Eingangswelle auf einer Antriebsseite des Getriebes, welche auf einer Eingangswellenachse angeordnet sind, aufweist. Das Getriebe weist eine Ausgangswelle als Abtriebswelle der zumindest zwei Teilgetriebe auf einer Abtriebsseite des Getriebes, wobei die Abtriebswelle auf der Eingangswellenachse oder auf zumindest einer Vorgelegewellenachse angeordnet ist, auf. Das Getriebe weist ein Vorgelege auf, wobei das Vorgelege zumindest eine Vorgelegewelle umfasst und wobei die zumindest eine Vorgelegewelle auf der zumindest einen Vorgelegewellenachse angeordnet ist. Das Getriebe weist ein Planentengetriebe auf, welches mit der Abtriebswelle verbunden ist. Die Vorgelewellen sind über zwischengeschaltete Radebenen miteinander verbindbar. Mittels der Radebenen wird eine Übersetzung dargestellt.
Eine Aufgabe der Erfindung ist es, ein alternatives und/oder verbessertes Mehrgruppengetriebe, insbesondere Doppelkupplungsgetriebe, zu schaffen.
Diese Aufgabe kann mit den Merkmalen des Hauptanspruchs gelöst werden. Vorteilhafte Weiterbildungen sind den Unteransprüchen zu entnehmen.

Erfindungsgemäß wird ein Mehrgruppengetriebe zweckmäßig für ein Nutzfahrzeug (z.B. einen Lastkraftwagen, insbesondere einen sogenannten schweren Lastkraftwagen) geschaffen. Das Mehrgruppengetriebe umfasst eine Splitgruppe, eine Hauptgruppe, eine Rangegruppe und eine Doppelkupplung. Die Splitgruppe umfasst vorzugsweise drei Splitkonstanten, nämlich eine erste Splitkonstante, eine zweite Splitkonstante und eine dritte Splitkonstante. Die Hauptgruppe umfasst vorzugsweise zwei Hauptgruppenvorwärtsgänge.
Das Mehrgruppengetriebe zeichnet sich insbesondere dadurch aus, dass die Splitgruppe zwei separate Lastpfade und die Hauptgruppe zwei separate Lastpfade zur Verfügung stellt. Dadurch können die Splitgruppe und die Hauptgruppe lastschaltbar ausgeführt werden, insbesondere voll lastschaltbar, um zweckmäßig sämtliche Vorwärtsgänge der Splitgruppe und sämtliche Vorwärtsgänge der Hauptgruppe lastschaltbar darstellen zu können. Vorzugsweise können zusätzlich auch sämtliche Rückwärtsgänge des Mehrgruppengetriebes lastschaltbar ausgeführt sein. Die zwei separaten Lastpfade umfassen zweckmäßig einen lastlosen Lastpfad und einen lastbeaufschlagbaren Lastpfad.
"Voll lastschaltbar" meint insbesondere, dass für jeden Gang, der im Leistungsfluss liegt, die Möglichkeit besteht, zumindest einen Gang darüber und/oder zumindest einen Gang darunter auf einem lastfreien Pfad auf der offenen Kupplung der Doppelkupplung voreinzulegen, sodass über eine Überschneidungsschaltung der Doppelkupplung die Lastschaltung durchführbar ist. Erfindungsgemäß weist das Mehrgruppengetriebe zwei koaxial zueinander verlaufende Vorgelegewellen auf, vorzugsweise eine erste hohle Vorgelegewelle und eine abschnittsweise in der ersten Vorgelegewelle angeordnete zweite Vorgelegewelle. Die Vorgelegewellen sind zweckmäßig über ein Schaltelement drehfest miteinander verbindbar.
Bei einer besonders bevorzugten Ausführungsform der Erfindung umfasst die Splitgruppe zwei separate Lastpfade, die Hauptgruppe zwei separate Lastpfade und die Rangegruppe zwei separate Lastpfade. Dadurch können die Splitgruppe, die Hauptgruppe und die Rangegruppe lastschaltbar ausgeführt werden, insbesondere voll lastschaltbar, um zweckmäßig sämtliche Vorwärtsgänge der Splitgruppe, sämtliche Vorwärtsgänge der Hauptgruppe und sämtliche Vorwärtsgänge der Rangegruppe und somit sämtliche Vorwärtsgänge des Mehrgruppengetriebes lastschaltbar darstellen zu können. Wie schon zuvor erwähnt, können zudem insbesondere auch sämtliche Rückwärtsgänge des Mehrgruppengetriebes lastschaltbar ausgeführt werden.

Das Mehrgruppengetriebe umfasst erfindungsgemäß eine erste Kupplung und eine zweite Kupplung aufweisende Doppelkupplung.
Die Doppelkopplung ermöglicht zweckmäßig durch eine Überschneidungsschaltung die Lastschaltbarkeit der Splitgruppe, der Hauptgruppe und/oder der Rangegruppe, und macht z.B. eine Umschaltung von einem Gang in einen anderen Gang und somit von einem Lastpfad zu einem anderen Lastpfad darstellbar. Erwähnenswert ist, dass die Lastschaltbarkeit, insbesondere sogar der Rangegruppe, vorzugsweise einzig durch die Doppelkupplung erzielt werden kann und somit zweckmäßig keine zusätzliche Kupplung hierzu erforderlich ist.

Das Mehrgruppengetriebe kann in einem Direktgang-Modus und in einem Overdrive-Modus betrieben werden. Das wird insbesondere durch die Doppelkupplung, die drei Splitkonstanten und die separaten Lastpfade der Splitgruppe, der Hauptgruppe und vorzugsweise der Rangegruppe ermöglicht. Die Umschaltbarkeit zwischen dem Direktgang-Modus und dem Overdrive-Modus ist durch eine Überschneidungsschaltung der Doppelkupplung darstellbar.
In Bezug auf die Lastschaltbarkeit der Splitgruppe ist zu erwähnen, dass die Splitgruppe zumindest zwei (vorzugsweise drei) Splitkonstanten umfassen kann und die Lastschaltbarkeit dadurch realisierbar ist, dass eine der Splitkonstanten in einem ersten lastbeaufschlagbaren Lastpfad einen Gang bildet, während zudem eine andere Splitkonstante in einem zweiten lastfreien Lastpfad einen anderen Gang bildet. Die Umschaltung von einem Gang in den anderen Gang und somit von einem Lastpfad zum anderen Lastpfad erfolgt durch die Überschneidungsschaltung der Doppelkupplung. Auf die gleiche Weise kann die Umschaltung zwischen Direktgang-Modus und Overdrive-Modus realisiert werden.
In Bezug auf die Lastschaltbarkeit der Hauptgruppe ist zu erwähnen, dass die Hauptgruppe zumindest zwei Hauptgruppenstufen umfasst und die Lastschaltbarkeit dadurch realisierbar ist, dass eine Hauptgruppenstufe in einem lastbeaufschlagbaren Lastpfad einen Gang bildet, während zudem eine andere Hauptgruppenstufe in einen zweiten lastfreien Lastpfad einen anderen Gang bildet. Die Umschaltung von einem Gang in den anderen Gang und somit von einem Lastpfad zum anderen Lastpfad erfolgt durch die Überschneidungsschaltung der Doppelkupplung. Auf die gleiche Weise kann die Umschaltung zwischen Direktgang-Modus und Overdrive-Modus realisiert werden.
In Bezug auf die Lastschaltbarkeit der Rangegruppe ist zu erwähnen, dass die Rangegruppe zumindest zwei Rangestufen umfasst und die Lastschaltbarkeit dadurch realisierbar ist, dass eine Rangestufe in einem ersten lastbeaufschlagbaren Lastpfad einen Gang bildet, während zudem eine andere Rangestufe in einem zweiten lastfreien Lastpfad einen anderen Gang bildet. Die Umschaltung von einem Gang in den anderen Gang und somit von einem Lastpfad zum anderen Lastpfad erfolgt durch die Überschneidungsschaltung der Doppelkupplung.
Es ist möglich, dass die zwei separaten Lastpfade der Splitgruppe, die zwei separaten Lastpfade der Hauptgruppe und/oder die zwei separaten Lastpfade der Rangegruppe frei miteinander kombinierbar sind, vorzugsweise so, dass in Bezug auf die einzelnen Gänge ein lastloser Lastpfad durchgängig durch die Splitgruppe, die Hauptgruppe und/oder die Rangegruppe verläuft und ein lastbeaufschlagbarer Lastpfad durchgängig durch die Splitgruppe, die Hauptgruppe und/oder die Rangegruppe verläuft.
Das Mehrgruppengetriebe umfasst vorzugsweise eine erste hohle Vorgelegewelle und eine abschnittsweise in der ersten Vorgelegewelle angeordnete zweite Vorgelegewelle. Die erste Vorgelegewelle und die zweite Vorgelegewelle erstrecken sich koaxial zueinander. Alternativ oder ergänzend kann das Mehrgruppengetriebe eine zweite hohle Getriebeeingangswelle und eine abschnittsweise in der zweiten Getriebeeingangswelle angeordnete erste Getriebeeingangswelle umfassen.
Außerdem kann das Mehrgruppengetriebe eine zweite hohle Getriebehauptwelle und eine abschnittsweise in der zweiten Getriebehauptwelle angeordnete erste Getriebehauptwelle umfassen. In einer alternativen Ausgestaltung der Erfindung kann das Mehrgruppengetriebe aber auch mit nur einer einzigen Getriebehauptwelle ausgeführt werden.
Es ist möglich, dass ein Rad einer ersten Splitkonstante z.B. auf der ersten Vorgelegewelle angeordnet ist und mit der ersten Vorgelegewelle fest drehfest verbunden ist. Zudem kann ein Ritzel der ersten Splitkonstante mit der ersten Getriebeeingangswelle über ein Schaltelement drehfest verbunden werden.
Es ist möglich, dass ein Losrad der zweiten Splitkonstante auf der ersten oder auf der zweiten Getriebeeingangswelle angeordnet ist und/oder ein Losrad der dritten Splitkonstante auf der zweiten Getriebeeingangswelle angeordnet ist. Es ist zudem möglich, dass das Losrad der zweiten Splitkonstante oder das Losrad der dritten Splitkonstante wahlweise über zweckmäßig dasselbe Schaltelement mit der zweiten Getriebeeingangswelle drehfest verbindbar sind. Des Weiteren kann das Zahnrad (Rad) der zweiten Splitkonstante und das Zahnrad der dritten Splitkonstante fest drehfest mit der zweiten Vorgelegewelle verbunden sein.

Das Mehrgruppengetriebe umfasst eine Doppelkupplung mit einer ersten Kupplung und einer zweiten Kupplung.
Bei einer anderen Ausführungsform der Erfindung kann die zweite, zweckmäßig mittlere Splitkonstante, wahlweise vorzugsweise über die erste Getriebeeingangswelle mit der ersten Kupplung verbunden werden und vorzugsweise über die zweite Getriebeeingangswelle mit der zweiten Kupplung verbunden werden. Dadurch wird z.B. ermöglicht, dass die zweite Splitkonstante von der ersten Kupplung und der zweiten Kupplung genutzt werden kann. Zudem wird insbesondere ermöglicht, dass ein Wechsel zwischen der ersten Getriebeeingangswelle und der zweiten Getriebeeingangswelle ohne Gangänderung darstellbar ist.

Vorzugsweise kann ein Losrad der zweiten, vorzugsweise mittleren, Splitkonstante über ein Schaltelement mit der ersten Getriebeeingangswelle drehfest verbunden werden und vorzugsweise zeitgleich über ein zusätzliches Schaltelement mit der zweiten Getriebeeingangswelle drehfest verbunden werden.

Außerdem kann ein Zahnrad der zweiten Splitkonstante fest drehfest mit der zweiten Vorgelegewelle verbunden sein.

Es ist möglich, dass ein Losrad der ersten Splitkonstante und ein Losrad der zweiten Splitkonstante über ein Schaltelement, vorzugsweise dasselbe Schaltelement, wahlweise mit der ersten Getriebeeingangswelle drehfest verbindbar sind.

Es ist möglich, dass ein Losrad der dritten Splitkonstante über ein Schaltelement drehfest mit der zweiten Getriebeeingangswelle verbindbar ist. Letztgenanntes Schaltelement ist vorzugsweise dasselbe Schaltelement, mittels dem auch die zweite Splitkonstante mit der zweiten Getriebeeingangswelle drehfest verbindbar ist.

Außerdem kann ein Zahnrad der zweiten Splitkonstante mit der zweiten Vorgelegewelle fest drehfest verbunden sein.

Ein Zahnrad der ersten Splitkonstante kann zweckmäßig fest drehfest mit der ersten Vorgelegewelle verbunden sein.

Ferner kann ein Zahnrad der dritten Splitkonstante mit der zweiten Vorgelegewelle fest drehfest verbunden sein.

Es ist möglich, dass ein Losrad der ersten Splitkonstante, ein Losrad der zweiten Splitkonstante und ein Losrad der dritten Splitkonstante auf einer die erste Getriebeeingangswelle und die zweite Getriebeeingangswelle umfassenden Getriebeeingangswellenanordnung angeordnet sind. Vorzugsweise können das Losrad der ersten Splitkonstante, das Losrad der zweiten Splitkonstante und das Losrad der dritten Splitkonstante z.B. über zwei Schaltelemente wahlweise mit der Getriebeeingangswellenanordnung verbunden werden. Das trägt insbesondere dazu bei, dass ein Wechsel zwischen der ersten Getriebeeingangswelle und der zweiten Getriebeeingangswelle ohne Gangänderung darstellbar ist. Das gilt insbesondere für den Fall, dass die zweite Splitkonstante in Eingriff steht, während es bei den anderen beiden Konstanten nicht geht. Zu erwähnen ist, dass das Losrad der ersten Splitkonstante und das Losrad der zweiten Splitkonstante vorzugsweise auf der ersten Getriebeeingangswelle angeordnet sind und das Losrad der dritten Splitkonstante vorzugsweise auf der zweiten Getriebeeingangswelle angeordnet ist. Das Losrad der zweiten Splitkonstante könnte alternativ auch auf der zweiten Getriebeeingangswelle angeordnet sein.

Es ist möglich, dass die Hauptgruppe drei Hauptgruppenstufen umfasst.

Insbesondere kann ein Zahnrad einer Hauptgruppenstufe für einen ersten Hauptgruppenvorwärtsgang fest drehfest mit der zweiten Vorgelegewelle verbunden sein.

Außerdem kann ein Losrad der Hauptgruppenstufe für den ersten Hauptgruppenvorwärtsgang über ein Schaltelement drehfest mit der ersten Getriebehauptwelle verbindbar sein oder über dasselbe Schaltelement mit der zweiten Getriebehauptwelle, insbesondere dem Steg der als Planetengetriebe ausgeführten Rangegruppe.

Die zweite, zweckmäßig hohle, Getriebehauptwelle umfasst vorzugsweise den Steg der als Planetengetriebe ausgeführten Rangegruppe.

Des Weiteren kann ein Zahnrad einer Hauptgruppenstufe für einen zweiten Hauptgruppenvorwärtsgang mit der ersten Vorgelegewelle fest drehfest verbunden sein. Außerdem kann ein Losrad der Hauptgruppenstufe für den zweiten Hauptgruppenvorwärtsgang über ein Schaltelement mit der ersten Getriebehauptwelle drehfest verbindbar sein.

Ferner kann ein Zahnrad einer Hauptgruppenstufe für einen Rückwärtsgang fest drehfest mit der ersten oder der zweiten Vorgelegewelle verbunden sein. Außerdem kann ein Losrad der Hauptgruppenstufe für den Rückwärtsgang über ein Schaltelement mit der ersten Getriebehauptwelle oder der Hauptwelle verbindbar sein. Letztgenanntes Schaltelement ist vorzugsweise dasselbe Schaltelement, mit dem auch die Hauptgruppenstufe für den zweiten Hauptgruppenvorwärtsgang mit der ersten Getriebehauptwelle drehfest verbindbar ist.

Es ist möglich, dass die erste Getriebeeingangswelle und die erste Getriebehauptwelle über ein zwischen der Splitgruppe und der Hauptgruppe angeordnetes Schaltelement miteinander verbindbar sind, um z.B. einen Direktgang zu ermöglichen.
Es ist möglich, dass mit der vorzugsweise als Planetengetriebe ausgeführten Rangegruppe eine langsame Gruppe und eine schnelle Gruppe dargestellt werden. Das kann z.B. mittels eines Schaltelements realisiert werden, das exakt drei Schaltstellungen umfasst, nämlich eine lastlose Schaltstellung, eine neutrale Schaltstellung und eine lastbeaufschlagbare Schaltstellung, wobei in der lastbeaufschlagbaren Schaltstellung ein Hohlrad der als Planetengetriebe ausgeführten Rangegruppe mit einem Gehäuse des Mehrgruppengetriebes drehfest verbindbar ist. Die Neutralstellung ist allerdings optional, so dass ebenso Ausführungsformen mit exakt zwei Schaltstellungen möglich sind.
Das Mehrgruppengetriebe kann in einer Ausführungsform der Erfindung 12 Vorwärtsgänge im Direktgang-Modus und/oder 13 Vorwärtsgänge im Overdrive-Modus zur Verfügung stellen. In einer alternativen Ausgestaltung kann das Mehrgruppengetriebe 15 Vorwärtsgänge im Direktgang-Modus und/oder 16 Vorwärtsgänge im Overdrive-Modus zur Verfügung stellen. Zudem stellt das Mehrgruppengetriebe vorzugsweise 3 oder 6 Rückwärtsgänge zur Verfügung. 6 Rückwärtsgänge können z.B. realisiert werden, indem die Rangegruppe für die Rückwärtsgänge umschaltbar ausgeführt wird.
Die Erfindung umfasst außerdem ein Nutzfahrzeug, insbesondere einen Lastkraftwagen (z.B. einen sogenannten schweren Lastkraftwagen) mit einem Mehrgruppengetriebe wie hierin beschrieben.
- Fig. 1: zeigt ein Mehrgruppengetriebe gemäß einer Ausführungsform der Erfindung,
- Fig. 2: zeigt ein Schaltbild mit Leistungsflüssen der einzelnen Gänge des Mehrgruppengetriebes der Fig. 1,
- Fig. 3: zeigt ein Schaltdiagramm des Mehrgruppengetriebes der Fig. 1 und 2,
- Fig. 4: zeigt ein Mehrgruppengetriebe gemäß einer anderen Ausführungsform der Erfindung,
- Fig. 5: zeigt ein Schaltbild mit Leistungsflüssen der einzelnen Gänge des Mehrgruppengetriebes der Fig. 4 und
- Fig. 6: zeigt ein Schaltdiagramm des Mehrgruppengetriebes der Fig. 4 und 5.

Die unter Bezugnahme auf die Figuren beschriebenen Ausführungsformen stimmen teilweise überein, wobei ähnliche oder identische Teile mit den gleichen Bezugszeichen versehen sind, und zu deren Erläuterung auch auf die Beschreibung anderer Ausführungsformen oder Figuren verwiesen wird, um Wiederholungen zu vermeiden.

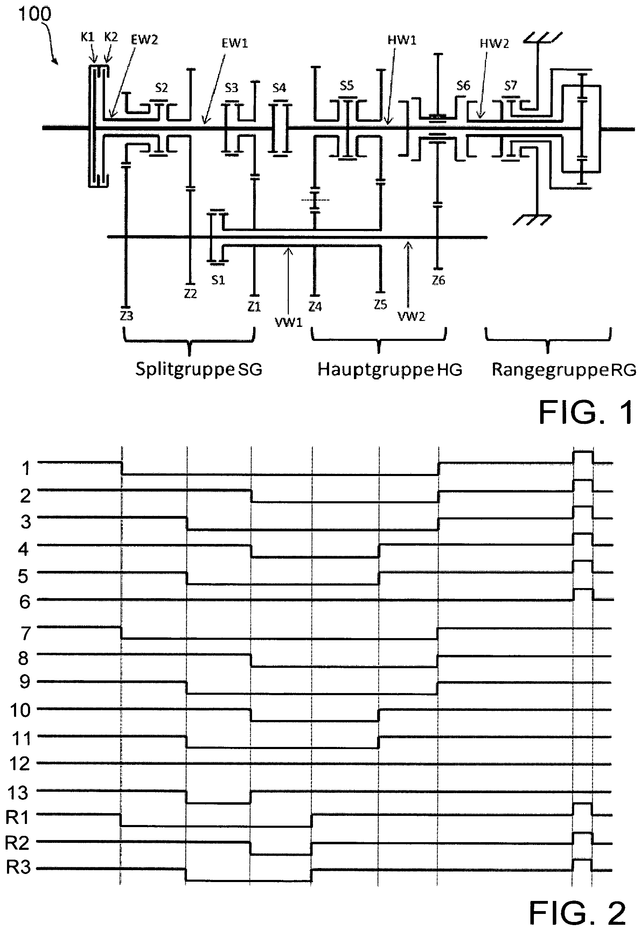

Figur 1 zeigt ein Mehrgruppengetriebe 100 für Nutzfahrzeuge, insbesondere sogenannte schwere Lastkraftwagen. Das Mehrgruppengetriebe 100 ist als Doppelkupplungsgetriebe ausgeführt.

Das Mehrgruppengetriebe 100 umfasst eine Splitgruppe SG, die drei Splitkonstanten, nämlich eine erste Splitkonstante Z1, eine zweite Splitkonstante Z2 und eine dritte Splitkonstante Z3 umfasst, eine Hauptgruppe HG, die zweckmäßig exakt zwei Hauptgruppenvorwärtsgänge aufweist, und eine als Planentengetriebe ausgeführte Rangegruppe RG. Zudem umfasst das Mehrgruppengetriebe 100 eine zwei Kupplungen K1 und K2 aufweisende Doppelkupplung.

Die Splitgruppe SG, die Hauptgruppe HG und die Rangegruppe RG umfassen jeweils zwei separate Lastpfade, nämlich einen lastlosen und einen lastbeaufschlagbaren, und sind jeweils voll lastschaltbar ausgeführt. Dadurch sind sämtliche Vorwärtsgänge der Splitgruppe SG, sämtliche Vorwärtsgänge der Hauptgruppe HG, sämtliche Vorwärtsgänge der Rangegruppe RG und somit sämtliche Vorwärtsgänge des Mehrgruppengetriebes 100 lastschaltbar ausgeführt. Zudem sind vorzugsweise auch sämtliche Rückwärtsgänge lastschaltbar ausgeführt.

Das Mehrgruppengetriebe 100 umfasst zudem eine erste hohle Vorgelegewelle VW1 und eine zweite, die erste Vorgelegewelle VW1 durchdringende volle Vorgelegewelle VW2. Ferner umfasst das Mehrgruppengetriebe 100 eine zweite hohle Getriebehauptwelle HW2 und eine erste, die zweite Getriebehauptwelle HW2 durchdringende volle Getriebehauptwelle HW1. Des Weiteren umfasst das Mehrgruppengetriebe 100 eine zweite hohle Getriebeeingangswelle EW2 und eine erste, die zweite Getriebeeingangswelle EW2 durchdringende volle Getriebeeingangswelle EW1. Die erste Getriebeeingangswelle EW1 und die erste Hauptgetriebewelle HW1 sind über ein zwischen der Splitgruppe SG und der Hauptgruppe HG angeordnetes Schaltelement S4 miteinander verbindbar, um einen Direktgang zu ermöglichen.

Das Mehrgruppengetriebe 100 ist so ausgeführt, dass die Lastschaltbarkeit der Splitgruppe SG, der Hauptgruppe HG und der Rangegruppe RG durch eine Überschneidungsschaltung der Doppelkupplung K1, K2 realisiert werden kann, vorzugsweise ohne dass hierzu eine oder mehrere zusätzliche Kupplungen erforderlich sind. Ebenso kann die Umschaltung zwischen den weiter unten erwähnten Overdrive- und Direktgang-Modi dargestellt werden.

Die Lastschaltung der Splitgruppe SG erfolgt im Allgemeinen wie folgt: Eine erste Splitkonstante bildet in einem ersten Lastpfad (z.B. der vollen Vorgelegewelle) einen ersten Gang, der unter Last steht, während zudem eine zweite Splitkonstante in einem zweiten Lastpfad (z.B. der hohlen Vorgelegewelle) einen zweiten Gang bildet, der lastfrei ist. Die Umschaltung von einem Gang in den anderen Gang und somit von einem Lastpfad zum anderen Lastpfad erfolgt durch die Überschneidungsschaltung einer Doppelkupplung K1, K2.

Die Lastschaltung der Hauptgruppe HG erfolgt im Allgemeinen wie folgt: Eine erste Hauptgruppenstufe (Zahnradstufe) bildet in einem ersten Lastpfad (z.B. der vollen Vorgelegewelle) einen ersten Gang, der unter Last steht, während zudem eine zweite Hauptgruppenstufe (Zahnradstufe) in einem zweiten Lastpfad (z.B. der hohlen Vorgelegewelle) einen zweiten Gang bildet, der lastfrei ist. Die Umschaltung von einem Gang in den anderen Gang und somit von einem Lastpfad zum anderen Lastpfad erfolgt durch die Überschneidungsschaltung der Doppelkupplung K1, K2.

Die Lastschaltung der als Planetengetriebe ausgeführten Rangegruppe RG erfolgt im Allgemeinen wie folgt: Eine volle Getriebehauptwelle ist mit einem Sonnenrad der Rangegruppe RG drehfest verbunden und bildet somit einen ersten Lastpfad, der unter Last steht, während zudem eine hohle Getriebehauptwelle mit einem Steg der Rangegruppe RG fest drehfest verbunden ist und somit einen zweiten Lastpfad bildet, der lastfrei ist. Die Umschaltung von einem Gang in den anderen Gang und somit von einem Lastpfad zum anderen Lastpfad erfolgt wiederum durch die Überschneidungsschaltung der Doppelkupplung K1, K2.

Der Steg der Rangegruppe RG stellt einen Teil der zweiten Hauptgetriebewelle HW2 dar.

Die zwei separaten Lastpfade der Splitgruppe SG, die zwei separaten Lastpfade der Hauptgruppe HG und die zwei separaten Lastpfade der Rangegruppe RG sind frei miteinander kombinierbar, so dass in Bezug auf die einzelnen Gänge des Mehrgruppengetriebes 100 sich ein lastloser Lastpfad durchgängig durch die Splitgruppe SG, die Hauptgruppe HG und die Rangegruppe RG zieht und zusätzlich sich ein lastbeaufschlagbarer Lastpfad durchgängig durch die Splitgruppe SG, die Hauptgruppe HG und die Rangegruppe RG zieht. Die Lastpfade der Splitgruppe SG, der Hauptgruppe HG und der Rangegruppe RG verlaufen somit nicht starr durch das Mehrgruppengetriebe 100 hindurch, sondern sind frei miteinander kombinierbar. Die Kombination erfolgt aber in Bezug auf jeden Vorwärtsgang so, dass jeweils ein kompletter Lastpfad durch alle drei Gruppen SG, HG und RG im Lastfluss liegt und zudem der andere Lastpfad durch alle drei Gruppen SG, HG und RG komplett lastlos ist.

Die Kupplung K1 der Doppelkupplung ist mit der ersten Getriebeeingangswelle EW1 fest drehfest verbunden, während die Kupplung K2 der Doppelkupplung mit der zweiten Getriebeeingangswelle EW2 fest drehfest verbunden ist.

Auf der ersten Getriebeeingangswelle EW1 ist ein Losrad der zweiten Splitkonstante Z2 und auf der zweiten Getriebeeingangswelle EW2 ist ein Losrad der dritten Splitkonstante Z3 angeordnet. Ein Schaltelement S2 ist ausgeführt, um die Losräder der zweiten Splitkonstante Z2 und der dritten Splitkonstante Z3 wahlweise mit der zweiten Getriebeeingangswelle EW2 drehfest zu verbinden.

Ein Ritzel der ersten Splitkonstante Z1 ist über ein Schaltelement S3 drehfest mit der ersten Getriebeeingangswelle EW1 verbindbar. Zahnräder der zweiten Splitkonstante Z2 und der dritten Splitkonstante Z3 sind fest drehfest mit der zweiten Vorgelegewelle VW2 verbunden, während ein Zahnrad der ersten Splitkonstante Z1 mit der ersten Vorgelegewelle VW1 fest drehfest verbunden ist und über ein Schaltelement S1 drehfest mit der zweiten Vorgelegewelle VW2 verbindbar ist. Das Schaltelement S1 dient ferner dazu, die erste Vorgelegewelle VW1 drehfest mit der zweiten Vorgelegewelle VW2 zu verbinden.

Die Hauptgruppe HG umfasst drei Hauptgruppenstufen Z4, Z5 und Z6.

Ein Zahnrad einer Hauptgruppenstufe Z6 für einen ersten Hauptgruppenvorwärtsgang ist fest drehfest mit der zweiten Vorgelegewelle VW2 verbunden. Ein Losrad der Hauptgruppenstufe Z6 ist über ein Schaltelement S6 drehfest mit der ersten Getriebehauptwelle HW1 verbindbar oder alternativ über das gleiche Schaltelement S6 mit der zweiten Getriebehauptwelle HW2 (insbesondere dem Steg der als Planetengetriebe ausgeführten Rangegruppe RG) drehfest verbindbar.

Ein Zahnrad einer Hauptgruppenstufe Z5 für einen zweiten Hauptgruppenvorwärtsgang ist fest drehfest mit der ersten Vorgelegewelle VW1 verbunden und ein Losrad der Hauptgruppenstufe Z5 ist über ein Schaltelement S5 drehfest mit der ersten Getriebehauptwelle HW1 verbindbar.

Ein Zahnrad einer Hauptgruppenstufe Z4 für einen Rückwärtsgang ist fest drehfest mit der zweiten Vorgelegewelle VW2 verbunden. Ein Losrad der Hauptgruppenstufe Z4 ist über das Schaltelement S5 drehfest mit der ersten Getriebehauptwelle HW1 verbindbar. Das Schaltelement S5 ist also ausgeführt, um wahlweise die Hauptgruppenstufe Z4 und die Hauptgruppenstufe Z5 mit der ersten Getriebehauptwelle HW1 drehfest zu verbinden.

Die Schaltelemente S5 bzw. S6 dienen folglich dazu, die Losräder der Hauptgruppenstufen Z4, Z5 und Z6 mit der ersten Getriebehauptwelle HW1 drehfest zu verbinden.

Zudem ist ein Sonnenrad der als Planetengetriebe ausgeführten Rangegruppe RG mit der ersten Getriebehauptwelle HW1 fest drehfest verbunden. Um das Sonnenrad wälzen die Planetenräder, die auf dem Steg des Planetengetriebes gelagert sind, über den der Abtrieb des Mehrgruppengetriebes 100 erfolgt. Die Planetenräder werden von dem Hohlrad des Planetengetriebes umschlossen.

Die Rangegruppe RG umfasst exakt zwei Ganggruppen, nämlich eine schnelle Ganggruppe und eine langsame Ganggruppe. Das wird insbesondere dadurch realisiert, dass die Rangegruppe RG ein Schaltelement S7 aufweist, das exakt drei Schaltstellungen umfasst, nämlich eine erste neutrale, in der das Hohlrad der Rangegruppe RG frei drehbar ist, eine zweite für eine schnelle Ganggruppe, in der das Hohlrad der Rangegruppe RG mit dem Steg der Rangegruppe RG drehfest verbindbar ist, wodurch das Planetengetriebe als Block umläuft, und eine dritte für eine langsame Ganggruppe, in der das Hohlrad der Rangegruppe RG mit einem Gehäuse des Mehrgruppengetriebes 100 drehfest verbindbar ist. Die neutrale Schaltstellung ist allerdings optional.

Mit dem Schaltelement S6 kann das Losrad der Hauptgruppenstufe Z6 mit dem Steg der Rangegruppe RG drehfest verbunden werden. Wird der Leistungsfluss von der Hauptgruppenstufe Z6 direkt über den Steg der Rangegruppe RG zum Getriebeabtrieb geleitet, wird dadurch die schnelle Übersetzung der Rangegruppe RG eingestellt. Um Reibungsverluste zu verhindern und um die restlichen Gänge mit der schnellen Ganggruppe der Rangegruppe RG zu verbinden, kann das Hohlrad der Rangegruppe RG mit dem Steg der Rangegruppe RG über das Schaltelement S7 verbunden werden, wodurch das Planetengetriebe als Block umläuft.

Das in Figur 1 gezeigte Mehrgruppengetriebe 100 ist ein Mehrgruppengetriebe 100, das wahlweise in einem Direktgang-Modus und in einem Overdrive-Modus betrieben werden kann. Herkömmliche Mehrgruppengetriebe hingegen sind entweder als Direktgang-Mehrgruppengetriebe oder als Overdrive-Mehrgruppengetriebe ausgeführt.

Das Mehrgruppengetriebe 100 ermöglicht insbesondere durch die erfindungsgemäße Ausführung der Splitgruppe SG, der Hauptgruppe HG und der Rangegruppe RG die Bildung sowohl eines Direktgang-Modus als auch eines Overdrive-Modus. Die Umschaltung zwischen dem Direktgang-Modus und dem Overdrive-Modus erfolgt wiederum durch die Überschneidungsschaltung der Doppelkupplung K1, K2, ohne dass hierzu eine zusätzliche Kupplung erforderlich ist.

Für den Direktgang-Modus stehen 12 Vorwärtsgänge zur Verfügung, während für den Overdrive-Modus 13 Vorwärtsgänge zur Verfügung stehen.

Figur 2 zeigt ein Schaltbild der Lastflüsse der einzelnen Gänge des Mehrgruppengetriebes 100 aus Figur 1. Zu sehen ist mitunter, dass das Mehrgruppengetriebe 100 zwölf Vorwärtsgänge im Direktgang-Modus und dreizehn Vorwärtsgänge im Overdrive-Modus zur Verfügung stellt. Zudem stellt das Mehrgruppengetriebe 100 drei Rückwärtsgänge R1, R2 und R3 zur Verfügung.

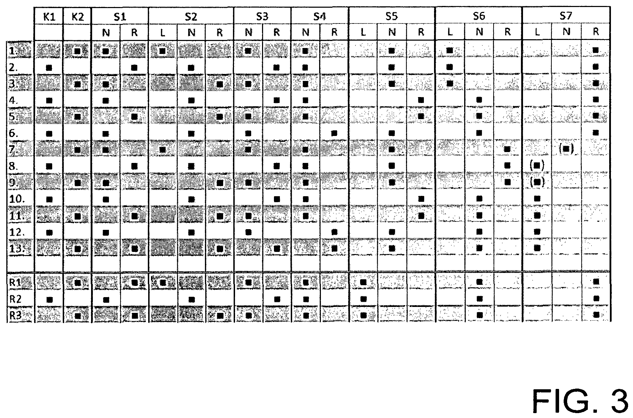

Figur 3 zeigt ein Schaltdiagramm des Mehrgruppengetriebes 100 aus Figur 1. Im Schaltdiagramm sind insbesondere die Kupplungen K1 und K2 und die Schaltelemente S1 bis S7 und deren zugehörigen Stellungen (L = Links; R = Rechts; N = Neutral) für die einzelnen Vorwärtsgänge 1 bis 13 und die drei Rückwärtsgänge R1 bis R3 aufgelistet.

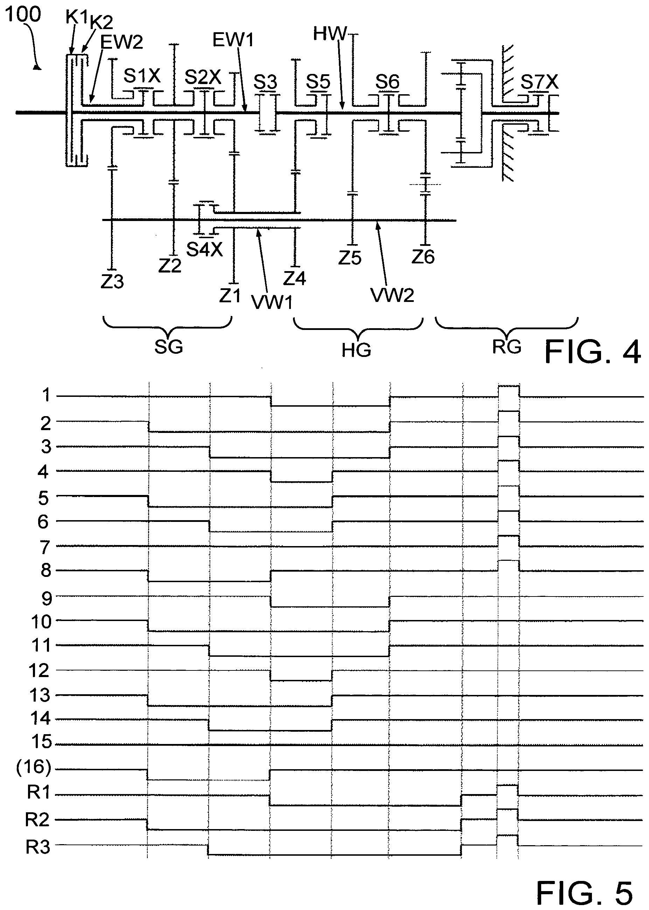

Figur 4 zeigt ein Mehrgruppengetriebe 100 gemäß einer anderen Ausführungsform der Erfindung.

Das Mehrgruppengetriebe 100 ist als Doppelkupplungsgetriebe ausgeführt und umfasst eine Splitgruppe SG mit einer ersten Splitkonstante Z1, einer zweiten Splitkonstante Z2 und einer dritten Splitkonstante Z3, eine Hauptgruppe HG, die vorzugsweise exakt zwei Hauptgruppenvorwärtsgänge vorsieht, eine als Planetengetriebe ausgeführte Rangegruppe RG, und eine zwei Kupplungen K1, K2 aufweisende Doppelkupplung. Die Kupplung K1 ist fest drehfest mit der ersten Getriebeeingangswelle EW1 und die Kupplung K2 ist fest drehfest mit der zweiten Getriebeeingangswelle EW2 verbunden.

Ähnlich wie das unter Bezugnahme auf die Figur 1 beschriebene Mehrgruppengetriebe 100 stellt das Mehrgruppengetriebe 100 der Figur 4 sowohl einen Direktgang-Modus als auch einen Overdrive-Modus zur Verfügung.

Die Splitgruppe SG umfasst zwei separate Lastpfade und die Hauptgruppe HG umfasst zwei separate Lastpfade, wodurch die Splitgruppe SG und die Hauptgruppe HG voll lastschaltbar ausgeführt sind. Die Rangegruppe RG hingegen ist nicht voll lastschaltbar.

Das Mehrgruppengetriebe 100 umfasst eine erste hohle Vorgelegewelle VW1 und eine zweite, die erste Vorgelegewelle VW1 durchdringende zweckmäßig volle Vorgelegewelle VW2. Zudem umfasst das Mehrgruppengetriebe 100 eine zweite hohle Getriebeeingangswelle EW2 und eine erste, die zweite Getriebeeingangswelle EW2 durchdringende zweckmäßig volle Getriebeeingangswelle EW1.

Eine Besonderheit des in Figur 4 gezeigten Mehrgruppengetriebes 100 ist, dass es keine wie unter Bezugnahme auf die Figur 1 beschriebene zweigeteilte Getriebehauptwelle HW1, HW2 aufweist, sondern eine einzige Getriebehauptwelle HW.

Durch Weglassen der zweiten, hohlen Getriebehauptwelle HW2 entfällt die Lastschaltbarkeit der Rangegruppe RG, bei sonst im Wesentlichen gleichem Leistungsumfang im Vergleich zum Mehrgruppengetriebe 100 der Figur 1. Die Splitgruppe SG und die Hauptgruppe HG bleiben voll lastschaltbar.

Wird das Mehrgruppengetriebe 100 wie in Figur 4 gezeigt ausgeführt und die Gangfolge im Vergleich zum Mehrgruppengetriebe 100 der Figur 1 verändert, so können im Direktgang-Modus 15 Vorwärtsgänge und im Overdrive-Modus 16 Vorwärtsgänge realisiert werden.

Das Schaltelement S7X der Figur 4 weist drei Schaltoptionen/Schaltstellungen auf, nämlich links, neutral und rechts, wobei die neutrale optional ist und folglich weggelassen werden könnte.

Eine Besonderheit ist, dass die zweite und somit mittlere Splitkonstante Z2 wahlweise mittels Schaltelementen S1X und S2X über die erste Getriebeeingangswelle EW1 mit der ersten Kupplung K1 und über die zweite Getriebeeingangswelle EW2 mit der zweiten Kupplung K2 drehfest verbunden werden kann. Wird z.B. vom dritten Gang in den vierten Gang geschaltet, wird der dritte Gang zuerst durch die Kupplung K1 und die erste Getriebeeingangswelle EW1 gebildet. Während die erste Kupplung K1 die Last/Leistung überträgt, kann zugleich die zweite Kupplung K2 geschlossen und danach die erste Kupplung K1 geöffnet werden. Die zweite Kupplung K2 und die zweite Getriebeeingangswelle EW2 können somit diesen Gang übernehmen, so dass die erste Kupplung K1 und die erste Getriebeeingangswelle EW1 wieder frei für den nächsten Gang (Gang vier) sind.

Unter erneuter Bezugnahme auf Figur 4 sind ein Zahnrad der zweiten Splitkonstante Z2 und ein Zahnrad der dritten Splitkonstante Z3 fest drehfest mit der zweiten Vorgelegewelle VW2 verbunden und ein Zahnrad der ersten Splitkonstante Z1 ist fest drehfest mit der ersten Vorgelegewelle VW1 verbunden.

Auf der ersten Getriebeeingangswelle EW1 sind ein Losrad der ersten Splitkonstante Z1 und ein Losrad der zweiten Splitkonstante Z2 angeordnet, während auf der zweiten Getriebeeingangswelle EW2 ein Losrad der dritten Splitkonstante Z3 angeordnet ist. Somit sind sämtliche Losräder der drei Splitkonstanten Z1, Z2 und Z3 auf der Getriebeeingangswellenanordnung EW1, EW2 angeordnet.

Schaltelement S2X ist ausgeführt, um wahlweise das Losrad der ersten Splitkonstante Z1 und das Losrad der zweiten Splitkonstante Z2 mit der ersten Getriebeeingangswelle EW1 drehfest zu verbinden.

Schaltelement S1X ist ausgeführt, um wahlweise das Losrad der zweiten Splitkonstante Z2 und das Losrad der dritten Splitkonstante Z3 mit der zweiten Getriebeeingangswelle EW2 drehfest zu verbinden.

Schaltelement S3 ist ausgeführt, um die erste Getriebeeingangswelle EW1 drehfest mit der Getriebehauptwelle HW zu verbinden und somit einen Direktgang zu ermöglichen.

Schaltelement S4X ist ausgeführt, um die erste Vorgelegewelle VW1 und die zweite Vorgelegewelle VW2 drehfest miteinander zu verbinden. Das Schaltelement S4X ist ferner ausgeführt, um die erste Splitkonstante Z1 drehfest mit der zweiten Vorgelegewelle VW2 zu verbinden.

Dadurch, dass die zweite Splitkonstante Z2 von der ersten Kupplung K1 und der zweiten Kupplung K2 nutzbar ist, und dadurch, dass die Losräder der drei Splitkonstanten Z1, Z2 und Z3 mit der ersten Getriebeeingangswelle EW1 bzw. der zweiten Getriebeeingangswelle EW2 verbindbar sind, ist ein Wechsel zwischen der ersten Getriebeeingangswelle EW1 und der zweiten Getriebeeingangswelle EW2 ohne Gangänderung realisierbar.

Ein Zahnrad einer Hauptgruppenstufe Z5 für einen ersten Hauptgruppenvorwärtsgang und ein Zahnrad einer Hauptgruppenstufe Z6 für einen Rückwärtsgang sind fest drehfest mit der zweiten Vorgelegewelle VW2 verbunden und ein Zahnrad einer Hauptgruppenstufe Z4 für einen zweiten Hauptgruppenvorwärtsgang ist fest drehfest mit der ersten Vorgelegewelle VW1 verbunden.

Die Losräder der Hauptgruppenstufen Z4, Z5 und Z6 sind auf der Getriebehauptwelle HW angeordnet. Sie können mit Schaltelementen S5 bzw. S6 mit der Getriebehauptwelle HW drehfest verbunden werden.

Die Getriebehauptwelle HW ist fest drehfest mit einem Sonnenrad der als Planetengetriebe ausgeführten Rangegruppe RG verbunden. Um das Sonnenrad wälzen die Planetenräder, die auf dem Steg der als Planetengetriebe ausgeführten Rangegruppe RG gelagert sind, über den auch der Abtrieb des Mehrgruppengetriebes 100 erfolgt. Die Planetenräder werden von einem Hohlrad des Planetengetriebes umschlossen.

Wird das Hohlrad über das Schaltelement S7X mit dem Gehäuse des Mehrgruppengetriebes 100 verbunden, ist die große Übersetzung bzw. die langsame Gruppe eingestellt. Wird das Hohlrad mit dem Schaltelement S7X mit dem Steg verbunden, ist die Rangegruppe RG verblockt und bildet einen direkten Durchtrieb und somit die schnelle Gruppe. Das in Figur 4 gezeigte Schaltelement S7X hat drei Schaltoptionen/Stellungsoptionen, nämlich links, neutral und rechts, wobei die neutrale optional ist.

Figur 5 zeigt ein Schaltbild mit Lastflüssen der einzelnen Gänge des Mehrgruppengetriebes 100 aus Figur 4. Zu sehen ist mitunter, dass das Mehrgruppengetriebe 100 fünfzehn Vorwärtsgänge im Direktgang-Modus und sechzehn Vorwärtsgänge im Overdrive-Modus zur Verfügung stellt. Zudem stellt das Mehrgruppengetriebe 100 drei Rückwärtsgänge R1, R2 und R3 zur Verfügung.

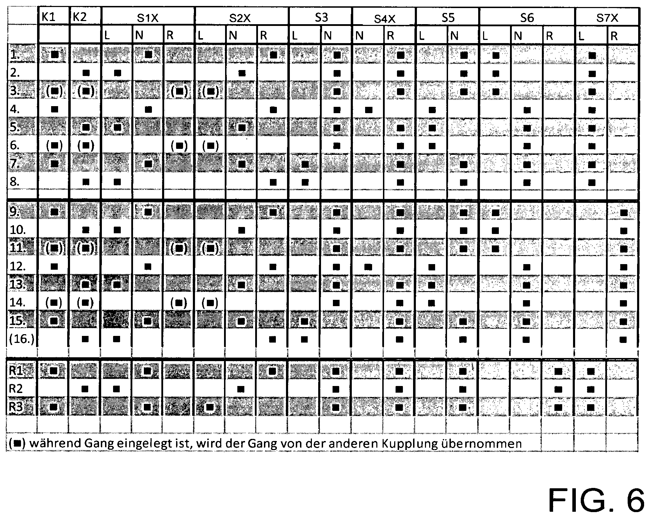

Figur 6 zeigt ein Schaltdiagramm des Mehrgruppengetriebes 100 aus Figur 4. Im Schaltdiagramm sind insbesondere die Kupplungen K1 und K2 und die verwendeten Schaltelemente und deren zugehörigen Stellungen (L = Links; R= Rechts; N = Neutral) für die einzelnen Vorwärtsgänge 1 bis 16 und die drei Rückwärtsgänge R1 bis R3 aufgelistet.

Zu erwähnen ist, dass für die Funktion des Mehrgruppengetriebes 100 und die Leistungsflüsse der einzelnen Gänge die Neutralstellung des Schaltelements S7X keine Bedeutung hat, weil die Rangegruppe RG nicht lastschaltbar ausgeführt ist und somit entweder als Block umläuft oder das Hohlrad mit dem Getriebegehäuse verbunden ist. In Figur 6 ist dem Schaltelement S7X deshalb keine Spalte für die Neutralstellung zugeordnet, weil die Spalte folglich leer wäre.

## Patentansprüche

1. Mehrgruppengetriebe (100), mit
- einer Splitgruppe (SG), vorzugsweise umfassend eine erste Splitkonstante (Z1), eine zweite Splitkonstante (Z2) und eine dritte Splitkonstante (Z3),
- einer Hauptgruppe (HG), vorzugsweise umfassend zwei Hauptgruppenvorwärtsgänge,
- einer Rangegruppe (RG), und
- einer Doppelkupplung (K1, K2),
wobei
- die Splitgruppe (SG) und die Hauptgruppe (HG) jeweils zwei separate Lastpfade umfassen und lastschaltbar ausgeführt sind, vorzugsweise voll lastschaltbar, wobei
- das Mehrgruppengetriebe (100) zwei koaxial zueinander verlaufende Vorgelegewellen (VW1, VW2) aufweist, das Mehrgruppengetriebe (100) sowohl einen Direktgang-Modus als auch einen Overdrive-Modus zur Verfügung stellt und die Umschaltbarkeit zwischen dem Direktgang-Modus und dem Overdrive-Modus durch eine Überschneidungsschaltung der Doppelkupplung (K1, K2) des Mehrgruppengetriebes (100) darstellbar ist, **dadurch gekennzeichnet, dass** die zwei koaxial zueinander verlaufenden Vorgelegewellen (VW1, VW2) über ein Schaltelement (S1; S4X) drehfest miteinander verbindbar sind.

2. Mehrgruppengetriebe (100) nach Anspruch 1, **dadurch gekennzeichnet, dass** die Splitgruppe (SG), die Hauptgruppe (HG) und die Rangegruppe (RG) jeweils zwei separate Lastpfade umfassen und voll lastschaltbar ausgeführt sind, um sämtliche Vorwärtsgänge und vorzugsweise sämtliche Rückwärtsgänge des Mehrgruppengetriebes (100) lastschaltbar darstellen zu können.

3. Mehrgruppengetriebe (100) nach Anspruch 2, **dadurch gekennzeichnet, dass** die Lastschaltbarkeit der Rangegruppe (RG) durch eine Überschneidungsschaltung der Doppelkupplung (K1, K2) darstellbar ist.

4. Mehrgruppengetriebe (100) nach einem der vorhergehenden Ansprüche, **dadurch gekennzeichnet, dass** die Lastschaltbarkeit der Splitgruppe (SG) und der Hauptgruppe (HG) durch eine Überschneidungsschaltung der Doppelkupplung (K1, K2) darstellbar ist.

5. Mehrgruppengetriebe (100) nach Anspruch 2 oder nach einem der Ansprüche 3 bis 4, wenn abhängig von Anspruch 2, **dadurch gekennzeichnet, dass** die zwei separaten Lastpfade der Splitgruppe (SG), der Hauptgruppe (HG) und der Rangegruppe (RG) frei miteinander so kombinierbar sind, dass in Bezug auf die einzelnen Gänge ein lastloser Lastpfad durchgängig durch die Splitgruppe (SG), die Hauptgruppe (HG) und die Rangegruppe (RG) verläuft und ein lastbeaufschlagbarer Lastpfad durchgängig durch die Splitgruppe (SG), die Hauptgruppe (HG) und die Rangegruppe (RG) verläuft.

6. Mehrgruppengetriebe (100) nach einem der vorhergehenden Ansprüche, **dadurch gekennzeichnet, dass** das Mehrgruppengetriebe (100) eine erste Getriebeeingangswelle (EW1) und eine zweite Getriebeeingangswelle (EW2) umfasst.

7. Mehrgruppengetriebe (100) nach einem der vorhergehenden Ansprüche, **dadurch gekennzeichnet, dass** das Mehrgruppengetriebe (100)
- eine erste Getriebehauptwelle (HW1) und eine zweite Getriebehauptwelle (HW2) umfasst, oder
- eine einzige Getriebehauptwelle (HW) umfasst.

8. Mehrgruppengetriebe (100) nach einem der vorhergehenden Ansprüche, **dadurch gekennzeichnet, dass** die erste Splitkonstante (Z1) drehfest mit der ersten Vorgelegewelle (VW1) verbunden ist und über ein Schaltelement (S1; S4X) drehfest mit der zweiten Vorgelegewelle (VW2) verbindbar ist, vorzugsweise über das Schaltelement (S1; S4X), mittels dem auch die zwei Vorgelegewellen (VW1, VW2) drehfest miteinander verbindbar sind.

9. Mehrgruppengetriebe (100) nach Anspruch 6 oder einem der Ansprüche 7 bis 8, wenn abhängig von Anspruch 6, **dadurch gekennzeichnet, dass** die erste Splitkonstante (Z1) mit der ersten Getriebeeingangswelle (EW1) über ein Schaltelement (S3) drehfest verbindbar ist.

10. Mehrgruppengetriebe (100) nach Anspruch 6 oder einem der Ansprüche 7 bis 9, wenn abhängig von Anspruch 6, **dadurch gekennzeichnet, dass** die zweite Splitkonstante (Z2) oder die dritte Splitkonstante (Z3) wahlweise über ein Schaltelement (S2) mit der zweiten Getriebeeingangswelle (EW2) drehfest verbindbar sind.

11. Mehrgruppengetriebe (100) nach einem der vorhergehenden Ansprüche, **dadurch gekennzeichnet, dass** die zweite Splitkonstante (Z2) und/oder die dritte Splitkonstante (Z3) drehfest mit der zweiten Vorgelegewelle (VW2) verbunden sind.

12. Mehrgruppengetriebe (100) nach einem der vorhergehenden Ansprüche, **dadurch gekennzeichnet, dass** die Doppelkupplung eine erste Kupplung (K1) und eine zweite Kupplung (K2) umfasst und die zweite, vorzugsweise mittlere, Splitkonstante (Z2) wahlweise von der ersten Kupplung (K1) und der zweiten Kupplung (K2) nutzbar ist.

13. Mehrgruppengetriebe (100) nach Anspruch 12, wenn abhängig von Anspruch 6, **dadurch gekennzeichnet, dass** die zweite, vorzugsweise mittlere, Splitkonstante (Z2) wahlweise über ein Schaltelement (S2X) mit der ersten Getriebeeingangswelle (EW1) drehfest verbindbar ist zur Verbindung mit der ersten Kupplung (K1) und zugleich über ein zusätzliches Schaltelement (S1X) mit der zweiten Getriebeeingangswelle (EW2) drehfest verbindbar ist zur Verbindung mit der zweiten Kupplung (K2).

14. Mehrgruppengetriebe (100) nach Anspruch 6 oder einem der Ansprüche 7 bis 13, wenn abhängig von Anspruch 6, **dadurch gekennzeichnet, dass** die erste Splitkonstante (Z1) und die zweite Splitkonstante (Z2) über ein Schaltelement (S2X) wahlweise mit der ersten Getriebeeingangswelle (EW1) drehfest verbindbar sind.

15. Mehrgruppengetriebe (100) nach Anspruch 6 oder einem der Ansprüche 7 bis 14, wenn abhängig von Anspruch 6, **dadurch gekennzeichnet, dass** die dritte Splitkonstante (Z3) über ein Schaltelement (S1X) drehfest mit der zweiten Getriebeeingangswelle (EW2) verbindbar ist, vorzugsweise über das Schaltelement (S1X), über das auch die zweite Splitkonstante (Z2) mit der zweiten Getriebeeingangswelle (EW2) verbindbar ist.

16. Mehrgruppengetriebe (100) nach einem der vorhergehenden Ansprüche, **dadurch gekennzeichnet, dass** die zweite Splitkonstante (Z2) mit der zweiten Vorgelegewelle (VW2) drehfest verbunden ist.

17. Mehrgruppengetriebe (100) nach einem der vorhergehenden Ansprüche, **dadurch gekennzeichnet, dass** die erste Splitkonstante (Z1) mit der ersten Vorgelegewelle (VW1) drehfest verbunden ist und die dritte Splitkonstante (Z3) mit der zweiten Vorgelegewelle (VW2) drehfest verbunden ist.

18. Mehrgruppengetriebe (100) nach Anspruch 6 oder einem der Ansprüche 7 bis 17, wenn abhängig von Anspruch 6, **dadurch gekennzeichnet, dass** ein Losrad der ersten Splitkonstante (Z1), ein Losrad der zweiten Splitkonstante (Z2) und ein Losrad der dritten Splitkonstante (Z3) auf einer die erste Getriebeeingangswelle (EW1) und die zweite Getriebeeingangswelle (EW2) umfassenden Getriebeeingangswellenanordnung (EW1, EW2) angeordnet sind und vorzugsweise über zwei Schaltelemente (S1X, S2X) mit der Getriebeeingangswellenanordnung (EW1, EW2) wahlweise verbindbar sind.

19. Mehrgruppengetriebe (100) nach einem der vorhergehenden Ansprüche, **dadurch gekennzeichnet, dass** die Hauptgruppe (HG) drei Hauptgruppenstufen (Z4, Z5, Z6) umfasst.

20. Mehrgruppengetriebe (100) nach Anspruch 19, wenn abhängig von Anspruch 7, **dadurch gekennzeichnet, dass** eine Hauptgruppenstufe (Z6) für einen ersten Hauptgruppenvorwärtsgang
- drehfest mit der zweiten Vorgelegewelle (VW2) verbunden ist und
- über ein Schaltelement (S6) wahlweise drehfest mit der ersten Getriebehauptwelle (HW1) verbindbar ist oder) mit einem Steg (HW2) der als Planetengetriebe ausgeführten Rangegruppe (RG) verbindbar ist.

21. Mehrgruppengetriebe (100) nach Anspruch 20 oder Anspruch 19, wenn abhängig von Anspruch 7, **dadurch gekennzeichnet, dass** eine Hauptgruppenstufe (Z5) für einen zweiten Hauptgruppenvorwärtsgang drehfest mit der ersten Vorgelegewelle (VW1) verbunden ist und über ein Schaltelement (S5) drehfest mit der ersten Getriebehauptwelle (HW1) verbindbar ist.

22. Mehrgruppengetriebe (100) nach Anspruch 7 oder einem der Ansprüche 8 bis 21, wenn abhängig von Anspruch 7, **dadurch gekennzeichnet, dass** eine Hauptgruppenstufe (Z4; Z6) für einen Rückwärtsgang drehfest mit der ersten Vorgelegewelle (VW1) oder der zweiten Vorgelegewelle (VW2) verbunden ist und über ein Schaltelement (S5; S6) mit der ersten Getriebehauptwelle (HW1) oder der Hauptwelle (HW) drehfest verbindbar ist.

23. Mehrgruppengetriebe (100) nach Anspruch 7, wenn abhängig von Anspruch 6, oder einem der Ansprüche 8 bis 22, wenn abhängig von einer Kombination der Ansprüche 6 und 7, **dadurch gekennzeichnet, dass** die erste Getriebeeingangswelle (EW1) und die erste Getriebehauptwelle (HW1) über ein insbesondere zwischen der Splitgruppe (SG) und der Hauptgruppe (HG) angeordnetes Schaltelement (S4) drehfest miteinander verbindbar sind.

24. Mehrgruppengetriebe (100) nach Anspruch 20 oder einem der Ansprüche 21 bis 23, wenn abhängig von Anspruch 20, **dadurch gekennzeichnet, dass** die Rangegruppe (RG) genau drei Schaltoptionen umfasst, nämlich eine erste neutrale, in der ein Hohlrad der Rangegruppe (RG) frei drehbar ist, eine zweite für eine schnelle Ganggruppe, in der das Hohlrad der Rangegruppe (RG) mit dem Steg der Rangegruppe (RG) drehfest verbindbar ist, wodurch das Planetengetriebe als Block umläuft, und eine dritte quasi verblockbare für eine langsame Ganggruppe, in der das Hohlrad der Rangegruppe (RG) mit einem Gehäuse des Mehrgruppengetriebes (100) drehfest verbindbar ist.

25. Mehrgruppengetriebe (100) nach einem der vorhergehenden Ansprüche, **dadurch gekennzeichnet, dass** das Mehrgruppengetriebe (100)
- 12 Vorwärtsgänge im Direktgang-Modus und/oder 13 Vorwärtsgänge im Overdrive-Modus zur Verfügung stellt, oder
- 15 Vorwärtsgänge im Direktgang-Modus und/oder 16 Vorwärtsgänge im Overdrive-Modus zur Verfügung stellt.

26. Nutzfahrzeug, insbesondere Lastkraftwagen, mit einem Mehrgruppengetriebe (100) nach einem der vorhergehenden Ansprüche.

## Claims

1. Multi-group transmission (100) having
- a splitter group (SG), preferably comprising a first splitter constant (Z1), a second splitter constant (Z2) and a third splitter constant (Z3),
- a main group (HG), preferably comprising two main-group forward gears,
- a range-change group (RG), and
- a dual clutch (K1, K2),
wherein
- the splitter group (SG) and the main group (HG) each comprise two separate load paths and are embodied in such a way as to be power-shiftable, preferably fully power-shiftable, wherein
- the multi-group transmission (100) has two layshafts (VW1, VW2) extending coaxially with one another, the multi-group transmission (100) makes available both a direct-gear mode and an overdrive mode and the ability to shift between the direct-gear mode and the overdrive mode can be provided by an overlapping shift of the double clutch (K1, K2) of the multi-group transmission (100), **characterized in that** the two layshafts (VW1, VW2) extending coaxially with one another can be connected to one another for conjoint rotation by means of a shift element (S1; S4X).

2. Multi-group transmission (100) according to Claim 1, **characterized in that** the splitter group (SG), the main group (HG) and the range-change group (RG) each comprise different load paths and are embodied in such a way as to be fully power-shiftable in order to be able to form all the forward gears and preferably all the reverse gears of the multi-group transmission (100) in a power-shiftable manner.

3. Multi-group transmission (100) according to Claim 2, **characterized in that** the ability of the range-change group (RG) for power shifting can be provided by an overlapping shift of the dual clutch (K1, K2).

4. Multi-group transmission (100) according to one of the preceding claims, **characterized in that** the ability of the splitter group (SG) and of the main group (HG) for power shifting can be provided by an overlapping shift of the dual clutch (K1, K2).

5. Multi-group transmission (100) according to Claim 2 or according to one of Claims 3 to 4 when dependent on Claim 2, **characterized in that** the two separate load paths of the splitter group (SG), of the main group (HG) and of the range-change group (RG) can be combined freely with one another in such a way that, in respect of the individual gears, a load-free load path runs continuously through the splitter group (SG), the main group (HG) and the range-change group (RG) and a load path that can be subjected to load runs continuously through the splitter group (SG), the main group (HG) and the range-change group (RG).

6. Multi-group transmission (100) according to one of the preceding claims, **characterized in that** the multi-group transmission (100) comprises a first transmission input shaft (EW1) and a second transmission input shaft (EW2).

7. Multi-group transmission (100) according to one of the preceding claims, **characterized in that** the multi-group transmission (100)
- comprises a first transmission main shaft (HW1) and a second transmission main shaft (HW2), or
- comprises a single transmission main shaft (HW).

8. Multi-group transmission (100) according to one of the preceding claims, **characterized in that** the first splitter constant (Z1) is connected for conjoint rotation to the first layshaft (VW1) and can be connected for conjoint rotation to the second layshaft (VW2) by means of a first shift element (S1; S4X), preferably by means of the shift element (S1; S4X) by means of which the two layshafts (VW1, VW2) can be connected for conjoint rotation to one another.

9. Multi-group transmission (100) according to Claim 6 or one of Claims 7 to 8 when dependent on Claim 6, **characterized in that** the first splitter constant (Z1) can be connected for conjoint rotation to the first transmission input shaft (EW1) by means of a shift element (S3).

10. Multi-group transmission (100) according to Claim 6 or one of Claims 7 to 9 when dependent on Claim 6, **characterized in that** the second splitter constant (Z2) or the third splitter constant (Z3) can be connected selectively for conjoint rotation to the second transmission input shaft (EW2) by means of a shift element (S2).

11. Multi-group transmission (100) according to one of the preceding claims, **characterized in that** the second splitter constant (Z2) and/or the third splitter constant (Z3) are connected for conjoint rotation to the second layshaft (VW2).

12. Multi-group transmission (100) according to one of the preceding claims, **characterized in that** the dual clutch comprises a first clutch (K1) and a second clutch (K2), and the second, preferably central, splitter constant (Z2) can be used selectively by the first clutch (K1) and the second clutch (K2).

13. Multi-group transmission (100) according to Claim 12 when dependent on Claim 6, **characterized in that** the second, preferably central, splitter constant (Z2) can be connected selectively for conjoint rotation to the first transmission input shaft (EW1) by means of a shift element (S2X) for connection to the first clutch (K1) and can simultaneously be connected for conjoint rotation to the second transmission input shaft (EW2) by means of an additional shift element (S1X) for connection to the second clutch (K2).

14. Multi-group transmission (100) according to Claim 6 or one of Claims 7 to 13 when dependent on Claim 6, **characterized in that** the first splitter constant (Z1) and the second splitter constant (Z2) can be connected selectively for conjoint rotation to the first transmission input shaft (EW1) by means of a shift element (S2X).

15. Multi-group transmission (100) according to Claim 6 or one of Claims 7 to 14 when dependent on Claim 6, **characterized in that** the third splitter constant (Z3) is connected for conjoint rotation to the second transmission input shaft (EW2) by means of a shift element (S1X), preferably by means of the shift element (S1X) by means of which the second splitter constant (Z2) can also be connected to the second transmission input shaft (EW2).

16. Multi-group transmission (100) according to one of the preceding claims, **characterized in that** the second splitter constant (Z2) is connected for conjoint rotation to the second layshaft (VW2).

17. Multi-group transmission (100) according to one of the preceding claims, **characterized in that** the first splitter constant (Z1) is connected for conjoint rotation to the first layshaft (VW1), and the third splitter constant (Z3) is connected for conjoint rotation to the second layshaft (VW2).

18. Multi-group transmission (100) according to Claim 6 or one of Claim 7 to 17 when dependent on Claim 6, **characterized in that** a freely rotating wheel of the first splitter constant (Z1), a freely rotating wheel of the second splitter constant (Z2) and a freely rotating wheel of the third splitter constant (Z3) are arranged on a transmission input shaft arrangement (EW1, EW2) comprising the first transmission input shaft (EW1) and the second transmission input shaft (EW2) and can preferably be connected selectively to the transmission input shaft arrangement (EW1, EW2) by means of two shift elements (S1X, S2X).

19. Multi-group transmission (100) according to one of the preceding claims, **characterized in that** the main group (HG) comprises three main group stages (Z4, Z5, Z6).

20. Multi-group transmission (100) according to Claim 19 when dependent on Claim 7, **characterized in that** a main group stage (Z6) for a first main-group forward gear
- is connected for conjoint rotation to the second layshaft (VW2) and,
- by means of a shift element (S6), can be selectively connected for conjoint rotation to the first transmission main shaft (HW1) or connected to a planet carrier (HW2) of the range-change group (RG), which is embodied as a planetary transmission.

21. Multi-group transmission (100) according to Claim 20 or Claim 19 when dependent on Claim 7, **characterized in that** a main group stage (Z5) for a second main-group forward gear is connected for conjoint rotation to the first layshaft (VW1) and can be connected for conjoint rotation to the first transmission main shaft (HW1) by means of a shift element (S5).

22. Multi-group transmission (100) according to Claim 7 or one of Claims 8 to 21 when dependent on Claim 7, **characterized in that** a main group stage (Z4; Z6) for a reverse gear is connected for conjoint rotation to the first layshaft (VW1) or the second layshaft (VW2) and can be connected for conjoint rotation to the first transmission main shaft (HW1) or the main shaft (HW) by means of a shift element (S5; S6).

23. Multi-group transmission (100) according to Claim 7 when dependent on Claim 6, or one of Claims 8 to 22 when dependent on a combination of Claims 6 and 7, **characterized in that** the first transmission input shaft (EW1) and the first transmission main shaft (HW1) can be connected to one another for conjoint rotation by means of a shift element (S4) arranged, in particular, between the splitter group (SG) and the main group (HG).

24. Multi-group transmission (100) according to Claim 20 or one of Claims 21 to 23 when dependent on Claim 20, **characterized in that** the range-change group (RG) comprises exactly three shift options, namely a first, neutral option, in which an annulus of the range-change group (RG) is freely rotatable, a second option for a high-speed gear group, in which the annulus of the range-change group (RG) can be connected for conjoint rotation to the planet carrier of the range-change group (RG), as a result of which the planetary transmission revolves as a block, and a third, quasi-lockable option for a low-speed gear group, in which the annulus of the range-change group (RG) can be connected to a case of the multi-group transmission (100) in a manner fixed against rotation relative thereto.

25. Multi-group transmission (100) according to one of the preceding claims, **characterized in that** the multi-group transmission (100)
- makes available 12 forward gears in the direct-gear mode and/or 13 forward gears in the overdrive mode, or
- makes available 15 forward gears in the direct-gear mode and/or 16 forward gears in the overdrive mode.

26. Commercial vehicle, in particular lorry, having a multi-group transmission (100) according to one of the preceding claims.

## Revendications

1. Boîte de vitesses à plusieurs groupes (100), comprenant
- un doubleur de gamme (SG) comprenant de préférence une première constante de division (Z1), une deuxième constante de division (Z2) et une troisième constante de division (Z3),
- un groupe principal (HG), de préférence comprenant deux rapports de marche avant de groupe principal,
- un groupe-relais (RG), et
- un double embrayage (K1, K2),
- le doubleur de gamme (SG) et le groupe principal (HG) comprenant à chaque fois deux chemins de charge séparés et étant réalisés de manière à pouvoir être commutés en charge, de préférence à pouvoir être commutés en pleine charge,
- la boîte de vitesses à plusieurs groupes (100) présentant deux arbres intermédiaires (VW1, VW2) s'étendant coaxialement l'un à l'autre, la boîte de vitesses à plusieurs groupes (100) fournissant à la fois un module à rapports directs et un module à rapports surmultipliés et la capacité de commutation entre le mode à rapports directs et le mode à rapports surmultipliés pouvant être réalisée par un branchement à chevauchement du double embrayage (K1, K2) de la boîte de vitesses à plusieurs groupes (100), **caractérisée en ce que** les deux arbres intermédiaires (VW1, VW2) s'étendant coaxialement l'un à l'autre peuvent être connectés l'un à l'autre de manière solidaire en rotation par le biais d'un élément de commutation (S1 ; S4X).

2. Boîte de vitesses à plusieurs groupes (100) selon la revendication 1, **caractérisée en ce que** le doubleur de gamme (SG), le groupe principal (HG) et le groupe-relais (RG) comprennent chacun deux chemins de charge séparés et sont réalisés avec une capacité de commutation de pleine charge, afin de pouvoir réaliser tous les rapports de marche avant et de préférence tous les rapports de marche arrière de la boîte de vitesses à plusieurs groupes (100) avec une capacité de commutation en charge.

3. Boîte de vitesses à plusieurs groupes (100) selon la revendication 2, **caractérisée en ce que** la capacité de commutation en charge du groupe-relais (RG) peut être réalisée par un branchement à chevauchement du double embrayage (K1, K2).

4. Boîte de vitesses à plusieurs groupes (100) selon l'une quelconque des revendications précédentes, **caractérisée en ce que** la capacité de commutation en charge du doubleur de gamme (SG) et du groupe principal (HG) peut être réalisée par un branchement à chevauchement du double embrayage (K1, K2).

5. Boîte de vitesses à plusieurs groupes (100) selon la revendication 2 ou selon l'une quelconque des revendications 3 et 4, lorsqu'elles dépendent de la revendication 2, **caractérisée en ce que** les deux chemins de charge séparés du doubleur de gamme (SG), du groupe principal (HG) et du groupe-relais (RG) peuvent être combinés librement l'un avec l'autre de telle sorte que par rapport aux rapports individuels, un chemin de charge sans charge s'étende sans interruption à travers le doubleur de gamme (SG), le groupe principal (HG) et le groupe-relais (RG) et qu'un chemin de charge pouvant être sollicité en charge s'étende sans interruption à travers le doubleur de gamme (SG), le groupe principal (HG) et le groupe-relais (RG).

6. Boîte de vitesses à plusieurs groupes (100) selon l'une quelconque des revendications précédentes, **caractérisée en ce que** la boîte de vitesses à plusieurs groupes (100) comprend un premier arbre d'entrée de boîte de vitesses (EW1) et un deuxième arbre d'entrée de boîte de vitesses (EW2).

7. Boîte de vitesses à plusieurs groupes (100) selon l'une quelconque des revendications précédentes, **caractérisée en ce que** la boîte de vitesses à plusieurs groupes (100) comprend
- un premier arbre principal de boîte de vitesses (HW1) et un deuxième arbre principal de boîte de vitesses (HW2), ou
- un arbre principal de boîte de vitesses unique (HW) .

8. Boîte de vitesses à plusieurs groupes (100) selon l'une quelconque des revendications précédentes, **caractérisée en ce que** la première constante de division (Z1) est connectée de manière solidaire en rotation au premier arbre intermédiaire (VW1) et peut être connectée par le biais d'un élément de commutation (S1 ; S4X) de manière solidaire en rotation au deuxième arbre intermédiaire (VW2), de préférence par le biais de l'élément de commutation (S1 ; S4X) au moyen duquel les deux arbres intermédiaires (VW1, VW2) peuvent également être connectés de manière solidaire en rotation l'un à l'autre.

9. Boîte de vitesses à plusieurs groupes (100) selon la revendication 6 ou selon l'une quelconque des revendications 7 et 8 lorsqu'elles dépendent de la revendication 6, **caractérisée en ce que** la première constante de division (Z1) peut être connectée de manière solidaire en rotation au premier arbre d'entrée de boîte de vitesses (EW1) par le biais d'un élément de commutation (S3).

10. Boîte de vitesses à plusieurs groupes (100) selon la revendication 6 ou selon l'une quelconque des revendications 7 à 9 lorsqu'elles dépendent de la revendication 6, **caractérisée en ce que** la deuxième constante de division (Z2) ou la troisième constante de division (Z3) peuvent être connectées de manière solidaire en rotation de manière sélective par le biais d'un élément de commutation (S2) au deuxième arbre d'entrée de boîte de vitesses (EW2).

11. Boîte de vitesses à plusieurs groupes (100) selon l'une quelconque des revendications précédentes, **caractérisée en ce que** la deuxième constante de division (Z2) et/ou la troisième constante de division (Z3) sont connectées de manière solidaire en rotation au deuxième arbre intermédiaire (VW2).

12. Boîte de vitesses à plusieurs groupes (100) selon l'une quelconque des revendications précédentes, **caractérisée en ce que** le double embrayage comprend un premier embrayage (K1) et un deuxième embrayage (K2) et la deuxième constante de division (Z2), de préférence centrale, peut être utilisée de manière sélective par le premier embrayage (K1) et le deuxième embrayage (K2).

13. Boîte de vitesses à plusieurs groupes (100) selon la revendication 12 lorsqu'elle dépend de la revendication 6, **caractérisée en ce que** la deuxième constante de division (Z2), de préférence centrale, peut être connectée au choix de manière solidaire en rotation au premier arbre d'entrée de boîte de vitesses (EW1) par le biais d'un élément de commutation (S2X) pour la connexion au premier embrayage (K1) et peut être connectée en même temps de manière solidaire en rotation par le biais d'un élément de commutation supplémentaire (S1X) au deuxième arbre d'entrée de boîte de vitesses (EW2) pour la connexion au deuxième embrayage (K2).

14. Boîte de vitesses à plusieurs groupes (100) selon la revendication 6 ou selon l'une quelconque des revendications 7 à 13 lorsqu'elles dépendent de la revendication 6, **caractérisée en ce que** la première constante de division (Z1) et la deuxième constante de division (Z2) peuvent être connectées de manière solidaire en rotation de manière sélective par le biais d'un élément de commutation (S2X) au premier arbre d'entrée de boîte de vitesses (EW1).

15. Boîte de vitesses à plusieurs groupes (100) selon la revendication 6 ou selon l'une quelconque des revendications 7 à 14 lorsqu'elles dépendent de la revendication 6, **caractérisée en ce que** la troisième constante de division (Z3) peut être connectée de manière solidaire en rotation au deuxième arbre d'entrée de boîte de vitesses (EW2) par le biais d'un élément de commutation (S1X), de préférence par le biais de l'élément de commutation (S1X) par le biais duquel également la deuxième constante de division (Z2) peut être connectée au deuxième arbre d'entrée de boîte de vitesses (EW2).

16. Boîte de vitesses à plusieurs groupes (100) selon l'une quelconque des revendications précédentes, **caractérisée en ce que** la deuxième constante de division (Z2) est connectée de manière solidaire en rotation au deuxième arbre intermédiaire (VW2).

17. Boîte de vitesses à plusieurs groupes (100) selon l'une quelconque des revendications précédentes, **caractérisée en ce que** la première constante de division (Z1) est connectée de manière solidaire en rotation au premier arbre intermédiaire (VW1) et la troisième constante de division (Z3) est connectée de manière solidaire en rotation au deuxième arbre intermédiaire (VW2).

18. Boîte de vitesses à plusieurs groupes (100) selon la revendication 6 ou selon l'une quelconque des revendications 7 à 17 lorsqu'elles dépendent de la revendication 6, **caractérisée en ce qu'**un pignon fou de la première constante de division (Z1), un pignon fou de la deuxième constante de division (Z2) et un pignon fou de la troisième constante de division (Z3) sont disposés sur un agencement d'arbre d'entrée de boîte de vitesses (EW1, EW2) comprenant le premier arbre d'entrée de boîte de vitesses (EW1) et le deuxième arbre d'entrée de boîte de vitesses (EW2), et peuvent être connectés de manière sélective de préférence par le biais de deux éléments de commutation (S1X, S2X) à l'agencement d'arbre d'entrée de boîte de vitesses (EW1, EW2).

19. Boîte de vitesses à plusieurs groupes (100) selon l'une quelconque des revendications précédentes, **caractérisée en ce que** le groupe principal (HG) comprend trois étages de groupe principal (Z4, Z5, Z6).

20. Boîte de vitesses à plusieurs groupes (100) selon la revendication 19 lorsqu'elle dépend de la revendication 7, **caractérisée en ce qu'**un étage du groupe principal (Z6) pour un premier rapport de marche avant du groupe principal
- est connecté de manière solidaire en rotation au deuxième arbre intermédiaire (VW2) et
- peut être connecté de manière solidaire en rotation de manière sélective au premier arbre principal de boîte de vitesses (HW1) par le biais d'un élément de commutation (S6) ou peut être connecté à un porte-satellites (HW2) du groupe-relais (RG) réalisé sous forme d'engrenage planétaire.

21. Boîte de vitesses à plusieurs groupes (100) selon la revendication 20 ou la revendication 19 lorsqu'elles dépendent de la revendication 7, **caractérisée en ce qu'**un étage du groupe principal (Z5) pour un deuxième rapport de marche avant du groupe principal est connecté de manière solidaire en rotation au premier arbre intermédiaire (VW1) et peut être connecté de manière solidaire en rotation par le biais d'un élément de commutation (S5) au premier arbre principal de boîte de vitesses (HW1).

22. Boîte de vitesses à plusieurs groupes (100) selon la revendication 7 ou selon l'une quelconque des revendications 8 à 21 lorsqu'elles dépendent de la revendication 7, **caractérisée en ce qu'**un étage du groupe principal (Z4 ; Z6) pour un rapport de marche arrière est connecté de manière solidaire en rotation au premier arbre intermédiaire (VW1) ou au deuxième arbre intermédiaire (VW2) et peut être connecté de manière solidaire en rotation par le biais d'un élément de commutation (S5 ; S6) au premier arbre principal de boîte de vitesses (HW1) ou à l'arbre principal (HW).

23. Boîte de vitesses à plusieurs groupes (100) selon la revendication 7 lorsqu'elle dépend de la revendication 6, ou selon l'une quelconque des revendications 8 à 22 lorsqu'elles dépendent d'une combinaison des revendications 6 et 7, **caractérisée en ce que** le premier arbre d'entrée de boîte de vitesses (EW1) et le premier arbre principal de boîte de vitesses (HW1) peuvent être connectés l'un à l'autre de manière solidaire en rotation par le biais d'un élément de commutation (S4) disposé notamment entre le doubleur de gamme (SG) et le groupe principal (HG).

24. Boîte de vitesses à plusieurs groupes (100) selon la revendication 20 ou selon l'une quelconque des revendications 21 à 23 lorsqu'elles dépendent de la revendication 20, **caractérisée en ce que** le groupe-relais (RG) comprend exactement trois options de commutation, à savoir une première option neutre dans laquelle une couronne dentée du groupe-relais (RG) peut tourner librement, une deuxième option pour un groupe de rapports rapides dans lequel la couronne dentée du groupe-relais (RG) peut être connectée de manière solidaire en rotation au porte-satellites du groupe-relais (RG), de sorte que l'engrenage planétaire tourne sous forme de bloc, et une troisième option pouvant quasiment être bloquée pour un groupe de rapports lents, dans lequel la couronne dentée du groupe-relais (RG) peut être connectée de manière solidaire en rotation à un boîtier de la boîte de vitesses à plusieurs groupes (100).

25. Boîte de vitesses à plusieurs groupes (100) selon l'une quelconque des revendications précédentes, **caractérisée en ce que** la boîte de vitesses à plusieurs groupes (100)
- fournit 12 rapports de marche avant en mode à rapports directs et/ou 13 rapports de marche avant en mode à rapports surmultipliés ou
- fournit 15 rapports de marche avant en mode à rapports directs et/ou 16 rapports de marche avant en mode à rapports surmultipliés.

26. Véhicule utilitaire, en particulier poids-lourds, comprenant une boîte de vitesses à plusieurs groupes (100) selon l'une quelconque des revendications précédentes.
